(19) Europäisches Patentamt
European Patent Office
Office européen des brevets

(11) **EP 3 318 133 B1**

(12) **EUROPEAN PATENT SPECIFICATION**

(45) Date of publication and mention
of the grant of the patent:
**26.05.2021  Bulletin 2021/21**

(51) Int Cl.:
*A23B 4/00* *(2006.01)*          *A23B 4/09* *(2006.01)*

(21) Application number: **17158028.5**

(22) Date of filing: **07.06.2012**

(54) **FOOD HYGIENE METHOD AND FOOD PRODUCT**

LEBENSMITTELHYGIENEVERFAHREN UND LEBENSMITTELPRODUKT

PROCÉDÉ D'HYGIÈNE ALIMENTAIRE ET PRODUIT ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2011  GB 201109454
27.02.2012  GB 201203366**

(43) Date of publication of application:
**09.05.2018   Bulletin 2018/19**

(62) Document number(s) of the earlier application(s) in
accordance with Art. 76 EPC:
**12727155.9 / 2 717 704**

(73) Proprietor: **Bernard Matthews Foods Limited
Birmingham B3 2BJ (GB)**

(72) Inventors:
• **HALL, Jeremy
Norfolk NR16 2EQ (GB)**
• **NORMANTON, John
Combe, Witney Oxfordshire OX29 8NH (GB)**

(74) Representative: **CSY London
10 Fetter Lane
London EC4A 1BR (GB)**

(56) References cited:
**WO-A1-2004/080189     GB-A- 2 105 570
US-A- 3 637 405          US-A1- 2010 075 016**

**Description**

**Summary**

The invention relates to a process for reducing the number of viable microorganisms present on the surface of meat, and to meat items so treated.

**Introduction**

Food-borne pathogens represent a significant and serious threat to human and animal health. Numerous species of microorganism reside naturally on many types of food, some of which are capable of causing diseases in man (and other animals) upon ingestion. Sensible precautions, such as thorough cooking at an appropriate temperature, observation of correct storage protocols for raw and cooked food, and adhering to proper hygiene standards when handling food, can all reduce but not eliminate incidence of such disease.

Amongst the disease-causing pathogens, *Campylobacter* is the most common bacterial cause of food poisoning. It is responsible for around 62,000 reported cases of illness in the UK every year; however, the estimated number of actual incidences is much higher, of the order of 600,000, as it is believed that most individuals affected by the pathogen do not seek medical assistance. The total number of campylobacter cases across the European Union states is calculated at 9 million cases per annum.

*Campylobacter* infection is also extremely common in retail poultry. The prevalence of *Campylobacter* in chicken at retail in the UK was 65.2%, based on the results from both methods combined, for the 927 samples tested (Food Survey Information sheet 04/09, A *UK survey of Campylobacter and Salmonella contamination of fresh chicken at retail sale,* UK Food Standards Agency).

*Campylobacter* is therefore one of the key organisms that health agencies are tackling in order to reduce levels of food-borne illness. *Campylobacter* can be found on meat, unpasteurised milk, and in untreated water; however there is strong evidence that poultry is the most common cause of illness.

*Campylobacter* is naturally present in many poultry birds, and is often found in the cecum. Transfer to the skin is thought to occur when the birds are slaughtered and eviscerated.

It would be very desirable to kill or remove Campylobacter (and other pathogens) from meat, in particular poultry and poultry products, which are intended for human (or animal) consumption.

**Brief Description of the Prior Art**

A known method of disinfecting poultry carcasses involves spraying or immersing the carcasses with water containing antimicrobial agents. However, in Europe, legislation specifies that potable water must be used to wash carcasses.

GB 2105570 (A) discloses a method of reducing "weepage" in fresh-pack poultry that includes the steps of first washing the carcasses with jets of unrefrigerated water to pre-cool them and add pick-up moisture, then tumbling the carcasses to equalize the amount of pick-up moisture carried by each carcass, to reduce the general level of pick-up moisture content somewhat, draining the carcasses by gravity to remove surface moisture, and finally subjecting them to a supercold atmosphere, such as may be obtained by directing expanded liquid carbon dioxide in rapidly moving currents over the carcasses for a time to freeze-crust the carcasses.

The "freeze-crusting" shrinks the skin to squeeze out pick-up moisture from the fatty fascia layer under the skin to reduce the pickup moisture level to the allowable amount of 8%, and to remove sufficient body heat that when a carcass is then allowed to temper to an even temperature throughout, it will be below the freezing point of water, but above the -3.30 °C freezing point of the flesh, for a very short time. The process is said to reduce seepage from the poultry products so treated.

The method is said to inhibit bacterial growth, and thus prolong shelf life. There is no disclosure of the method having any bactericidal effect, however.

US 3637405 discloses a process for packaging and preserving meats to give long shelf life and greater tenderness. The portioned or whole chicken is exposed to cold air at a temperature of -40 °C for 1 hour. The crust-frozen chicken is then held at 0 °C for at least 3 hours. The method is said to inhibit bacterial growth, and thus prolong shelf life. There is no disclosure of the method having any bactericidal effect, however.

WO 2004080189 discloses a method comprising rapidly cooling meat by exposure to a rapid cooling temperature of below about -10 °C for sufficient time to provide a frozen crust on the meat and chilling the resultant crust-frozen meat by exposure of said crust-frozen meat to a chilling temperature greater than the rapid cooling temperature but no higher than about +10 °C to raise the temperature of the surface of the meat and to maintain said surface at a temperature no higher than the freezing temperature of the meat for at least sufficient time to injure lethally and/or kill bacteria, is used to reduce the viability of bacteria on meat. The method is stated to have particular application in the processing of poultry meat to kill bacteria comprising the *Campylobacter* and/or *Salmonella* species.

Although the method disclosed in WO 2004080189 apparently achieves the objective of reducing the count of *Campylobacter* (and other bacterial species), the poultry treated according to the process cannot be sold in the EU as "fresh". The sale of poultry either as whole birds or portions is regulated under the EC Poultrymeat Marketing Regulation 1906/90 (which has been incorporated into a combined EC Marketing Regulation 1234/2007). This Regulation categorizes poultry meat and only allows poultry to be marketed as fresh, frozen or quick-frozen. Fresh poultry is defined 'fresh poultry meat' means poultry meat not which has not been stiffened at any time by the cooling process, prior to being kept at a temperature not below -2°C and not higher than +4°C. It is not permitted to market chilled/fresh poultry which has been previously frozen and then thawed.

Studies have been conducted to determine rates of *Campylobacter jejuni* inactivation on poultry exposed to different cooling and freezing temperatures (Reduction of C. jejuni on the Surface of Poultry by Low Temperature (J. Food Prot, 66, 4, 2003, 652-655)). A mixture of three strains of *C. jejuni* originally isolated from poultry was inoculated onto chicken wings. Storage of wings at -20 and -30 °C for 72 h reduced the population of *C. jejuni* on wings by 1.3 and 1.8 $\log_{10}$ CFU/g, respectively. Protocols were developed to superchill chicken wings with liquid nitrogen at -80, -120, -160, and -196 °C such that the internal portion of each wing quickly reached -3.3 °C but did not freeze. The study concluded that conditions used in the poultry industry to superchill poultry to a nonfrozen-state internal temperature are not likely to substantially reduce *Campylobacter* populations on fresh products.

## Summary of the Invention

In an aspect, the invention relates to a process for reducing the number of viable microorganisms present on the surface of a meat item, comprising the steps of:

a) placing an untreated meat item in a chamber wherein the chamber atmosphere has a temperature T1 between -5 and 20°C;

b) reducing the temperature of the chamber atmosphere at a selected cooling rate of between 0.1 and 10 °Cs-1 to a temperature T2 below -20 °C;

c) maintaining the chamber atmosphere at temperature T2 for a selected period of time;

d) allowing the meat item to warm, at a selected warming rate of less than 20 °Cs-1, by adjusting the temperature of the chamber atmosphere to a temperature T3 above - 20 °C;

wherein the temperature of the meat item does not fall below -2 °C and the meat item remains unfrozen.

## Summary of the Figures

Figure 1 is a graph showing the temperature of the surface, interior and atmosphere of a turkey carcass treated for 4 minutes

Figure 2 is a graph graph showing the temperature of the surface, interior and atmosphere of a turkey carcass treated for 40 seconds.

Figure 3 is a graph graph showing the temperature of the surface, interior and atmosphere of a turkey carcass treated for 1.5 minutes.

Figure 4 is a graph graph showing the temperature of the surface, interior and atmosphere of a turkey carcass treated for 2 minutes.

Figure 5 is a graph graph showing the temperature of the surface, interior and atmosphere of a turkey carcass treated for 1 minute.

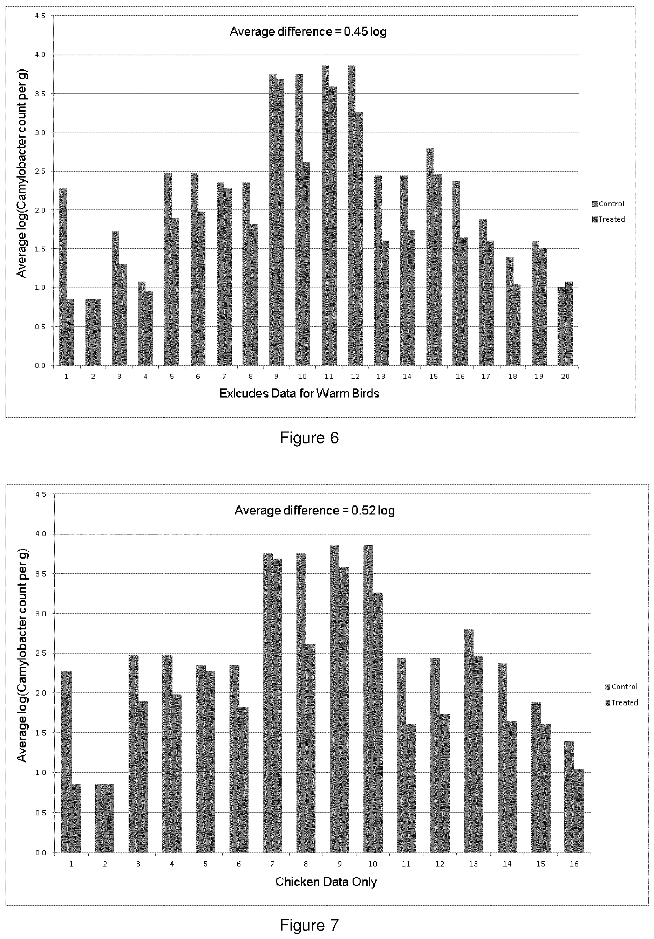

Figure 6 is a graph showing a summary of Campylobacter levels on chickens - excluding warm bird data on day K+1.

Figure 7 is a graph showing a summary of Campylobacter levels on chickens - excluding warm bird data on day K+1.

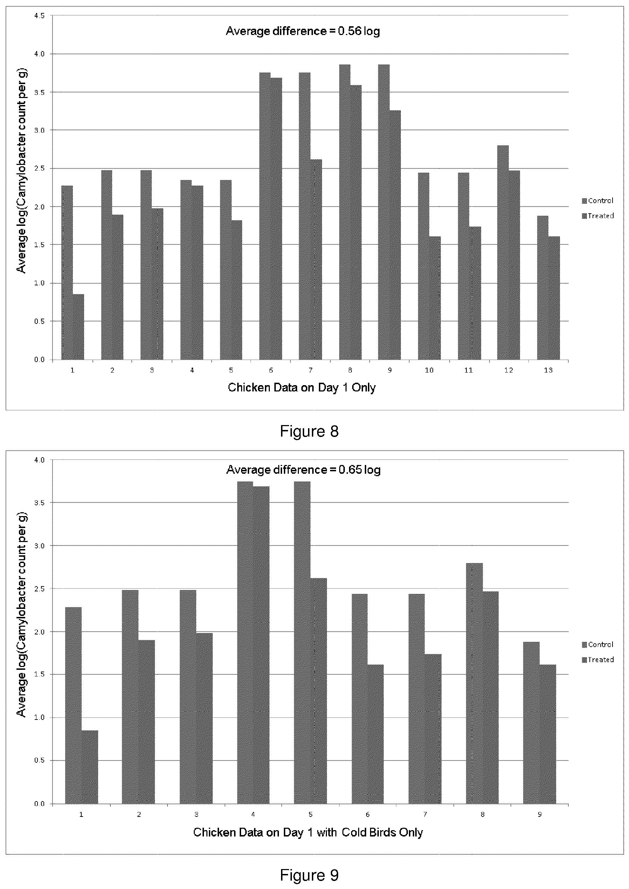

Figure 8 is a graph showing a summary of Campylobacter levels on chickens - excluding warm bird data on day K+1 .

Figure 9 is a graph.showing a summary of Campylobacter levels on chickens - excluding warm bird data on day K+1 with 2 min treatment time.

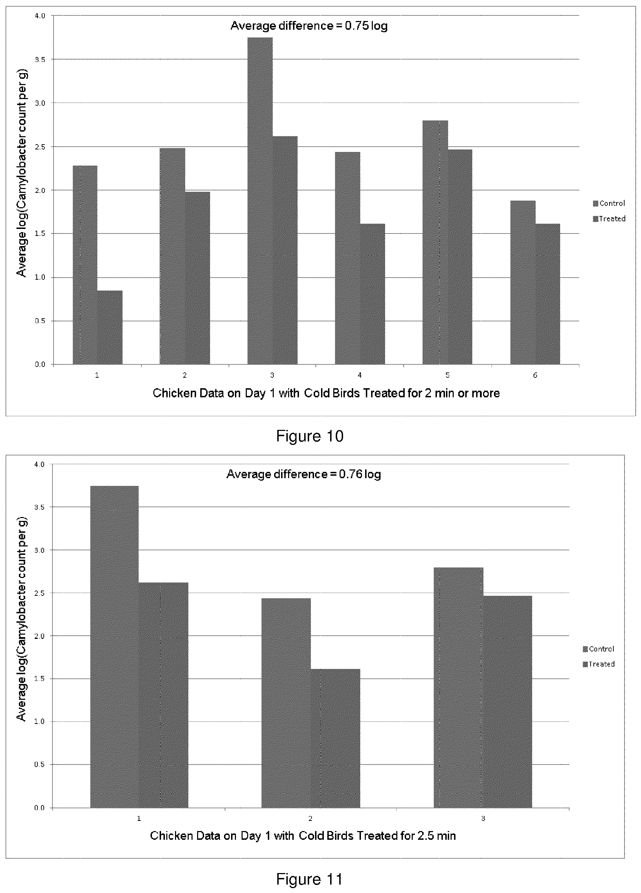

Figure 10 is a graph showing a summary of Campylobacter levels on chickens - excluding warm bird data on day K+1 with 2.5 min treatment time.

Figure 11 is a graph showing a summary of Campylobacter levels on chickens - excluding warm bird data on day K+1 with 2.5 min treatment time.

Figure 12 is a graph showing the temperature profile of a meat item subject to an embodiment of the inventive process.

Figure 13 is a graph showing the temperature of the surface, interior and atmosphere of a chicken carcass treated for 1 minute.

**Detailed Description of the Preferred Embodiments**

The term "meat" as used herein refers to any form of edible (by human or animal) flesh, and includes, without limitation, pork, lamb, mutton, veal, beef, venison, fish, shellfish, molluscs and poultry. The methods of the invention are, however, particularly appropriate for the treatment of poultry.

"Poultry" in this context includes edible birds of any type. Examples of poultry are chicken, turkey, pheasant, quail, duck, goose, guinea fowl and swan. Chicken and turkey are preferred.

The term "meat item" encompasses whole animal carcasses, both entire and eviscerated, as well as portions of meat (cuts), which comprise at least a proportion of muscle tissue. Examples of meat items are whole, eviscerated poultry carcasses, and poultry breasts, thighs, drumsticks, lower legs and wings.

The term "untreated meat item" refers to a meat item as hereinbefore defined, which has not been subjected to the inventive process. It may (and preferably will have) undergone a number of preceding steps customary in the preparation of meat, such as stunning, slaughter, evisceration, scalding, removal of head and legs, defeathering, water or air chilling and jointing.

The term "microorganism" refers to any organism that is capable of causing illness or disease in humans or other animals. Examples of microorganisms include bacteria, fungi, archaea, and protists. Preferred microorganisms which are controlled by the methods of the invention include *Campylobacter spp., Clostridium perfringens, Escherichia coli, Salmonella* spp., *Bacillus cereus, Shigella* spp., *Staphylococcus aureus, Streptococcus, Listeria monocytogenes, Vibrio cholerae, Vibrio parahaemolyticus, Vibrio vulnificus, Yersinia enterocolitica, Yersinia pseudotuberculosis, Coxiella burnetii, Brucella* spp., *Corynebacterium ulcerans,* and *Plesiomonas shigelloides.* More preferred microorganisms are *Campylobacter spp.* and *Salmonella* spp. Highly preferred are gram negative bacteria, especially *Campylobacter* species including *Campylobacter jejuni* and *Campylobacter coli,* especially *Campylobacter jejuni.*

The term "viable microorganism" refers to a microorganism as hereinbefore defined, which is capable of causing illness or disease when ingested. It encompasses nonculturable bacteria that are in a state of very low metabolic activity and do not divide, but are alive and have the ability and become culturable once resuscitated, as well as culturable and reproducing microorganisms.

The term "membrane" refers to any biological layer which covers or adheres to the surface of the meat item to be treated, which is not muscle tissue. It includes, for example, skin (dermis and epidermis), as well as layers of fat or cartilage. It also includes the inner membrane of the body cavity of eviscerated poultry fowl.

The term "β-hydroxyacyl-CoA dehydrogenase (HADH) activity" refers to the activity muscle mitochondrial enzyme, β-hydroxyacyl-CoA-dehydrogenase, which is released into the intracellular fluid when the mitochondrial membranes are damaged during freezing and thawing.

β-hydroxyacyl-CoA dehydrogenase (HADH) activity is measured using the protocol described in "The Effect of Superchilling and Rapid Freezing on the HADH Assay for Chicken and Turkey", J. Assoc. Publ. Analysts, 2010, 38, 13-23, a modification of the method described in "Verification of Labelling of Previously Frozen Meat and Poultry by Measurement of HADH Activity" Hargin, K., J. Assoc. Publ. Analysts, 1997, 33, 1-46. The protocol is briefly summarised below.

A cuboid shaped portion of flesh with base dimensions of approximately 30x30mm and a height of 20mm is used for the HADH test. For the poultry cuboid it is necessary to have six cut surfaces.

Preferably, the cuboid is taken from a predetermined depth below the surface of the surface membrane, such as between 1 and 10 mm below the surface.

Any excess surface liquid on the sample is wiped off with a tissue. The meat juice is expressed from the sample and diluted with a phosphate buffer. Aliquots of EDTA, phosphate buffer and NADH are added to diluted press juice, followed by acetoacetyl-Coenzyme A solution, in a quartz spectrophotometer cuvette. Using a U.V. spectrophotometer the rate of conversion of NADH to NAD$^+$ is measured by the rate of decrease in the absorption of the solution. The extinction at 340mm is read. The difference between the two readings ΔE is the decrease in absorption at 340mm.

$$\text{HADH activity U/ml} = \frac{V \times \Delta E / \min \times \text{dilution factor of meat juice}}{C \times d \times a}$$

Where V = volume of test mixture = 3ml
C = extinction of co-efficient for NADH at 340nm = 6.3

d = light path of cell = 1cm
a = volume of diluted meat juice = 0.1 ml
T = time over which decrease in absorption is measured in minutes

$$\Delta E / min = \underline{\text{Extinction at start of reaction} - \text{extinction at T min}}$$

The equation becomes:-

$$\text{HADH activity U/ml} = \quad 3 \quad \text{x } \Delta E / min \text{ x dilution factor of meat juice *}$$
$$\text{----------------------}$$
$$6.3 \text{ x 1 x 0.1}$$

(* e.g. 200 for beef)

The juice pressed from meat that has been frozen and thawed will therefore exhibit higher HADH activity than meat which has not been previously frozen. Since some HADH may be released when the meat is cut during sample preparation the method is a comparative one, where the HADH activity is determined on the untreated meat item as received ($X_0$), and then determined after treatment ($X_1$). The ratio of the HADH activities ($X_1/X_0$) is referred to as the $R_1$ value. If the $R_1$ value is less than 1.2, preferably less than 1.1, more preferably less than 1.05, then the HADH activity of the meat or poultry is regarded as not significantly increased.

Cooling may be achieved by any one of a number of methods. Meat items may be placed in a chamber containing air (or other refrigerant gas) held at an appropriate temperature to achieve the selected cooling rate. One or more gas circulation means (such as fans, blowers etc.) may be provided to increase the flow of cold air over the meat item, to increase the rate of cooling of the surface membrane.

Alternatively, and preferably, the surface membrane of the meat item may be cooled with a cryogen. Suitable cryogens include liquefied gasses, such as liquid nitrogen, liquid air, liquid carbon dioxide and liquid argon, and solids, such as solid carbon dioxide ("dry ice", preferably in finely divided form), and combinations of these. Liquid nitrogen is a preferred cryogen.

Cryogen may be applied to the surface membrane as a jet, spray or bath. It is preferred that cryogen is applied as a spray. Various types of spray nozzle, such as roses or spraybars may be utilised, depending on the size and shape of the meat item to be treated.

Preferably, the cryogen is applied in combination with an impinging gas. Impinging gas serves to convey the cryogen to the surface membrane of the meat item and thus increases the rate of cooling. Suitable impinging gasses include nitrogen, air, and carbon dioxide, and mixtures of these. The pressure of the impinging gas, and the amount relative to the cryogen, are adjusted so as to achieve the selected cooling rate.

One embodiment of the process utilizes impingement type gas flow of cryogen, such as carbon dioxide or nitrogen gas, in a straight pass-through configuration. The meat item is loaded into one end of the apparatus, and is removed with the surface membrane at a selected first temperature at the opposite end. Conveyors or driven shackle lines may be used to convey the meat item through the cooling apparatus and process.

In certain embodiments, the meat item is conveyed for surface cooling along a passage formed between a pair of impingement plates through which a cooling flow of a cryogen, such as carbon dioxide or nitrogen gas, is circulated to cool the surface membrane. In an alternative embodiment, the impingement plates may be disposed to one side, as opposed to being beneath the blower which circulates the cryogen. In embodiments where the meat item is a poultry carcass, the conveyer in these embodiments is a shackle conveyor.

In an alternative embodiment, a cryogenic food cabinet freezer is used. A suitable device is the CRYOLINE® CF, supplied by LINDE AG, Linde Gases Division, Seitnerstrasse 70 82049 Pullach, Germany. This embodiment is more appropriate for batch freezing and chilling processes where an in-line system is not appropriate.

In one embodiment, cryogen is supplied to the interior of a meat item by means of a spray nozzle connected to a cannula or probe. This embodiment is convenient for the internal sterilisation of the body cavity of eviscerated poultry carcasses, for example.

As used herein, the term "temperature of the meat item" refers to the average temperature throughout the item. The temperature of the meat item does not fall below -2 °C at any point during the procedure. Preferably, no part of the meat item falls below -2 °C at any point during the procedure. No part of the meat item is frozen at any point during the inventive process.

As used herein, "surface temperature" refers to the average temperature of the whole or part of the surface of a meat item, as measured by a surface temperature thermocouple probe.

As used herein, "interior temperature" refers to the average temperature at a predetermined depth below the surface of the meat item measured by a temperature probe. Preferably, the interior temperature is measured at a depth of at least 3mm below the surface, more preferably at least 5mm. Preferably, the temperature of the interior does not fall below -2 °C at any point during the inventive process.

The temperature of the meat item may be (in the case of freshly slaughtered whole poultry carcasses, for instance), be around or just below body heat, such as between 25 and 37 °C. Alternatively, the interior temperature may be around ambient temperature, such as between 15 and 25 °C.

However, it has been found preferable that the temperature of the meat item is below ambient temperature, such as below 20 °C. More preferably, the interior temperature is below 15 °C. Still more preferably, interior temperature is below 10 °C. Still more preferably, the interior temperature is below 5 °C. When employing such initial temperatures, good control of bacteria and consistency of results is achieved.

Preferably, the temperature of the meat item is above 0 °C. More preferably, the interior temperature is above 1 °C. Still more preferably, the interior temperature is above 2 °C.

The untreated meat item is exposed to an atmosphere at an initial temperature $T^1$. The atmosphere may be air, nitrogen or any other suitable gas. Preferably, $T^1$ is between -5 and 20 °C. More preferably, $T^1$ is between -3 and 10 °C.

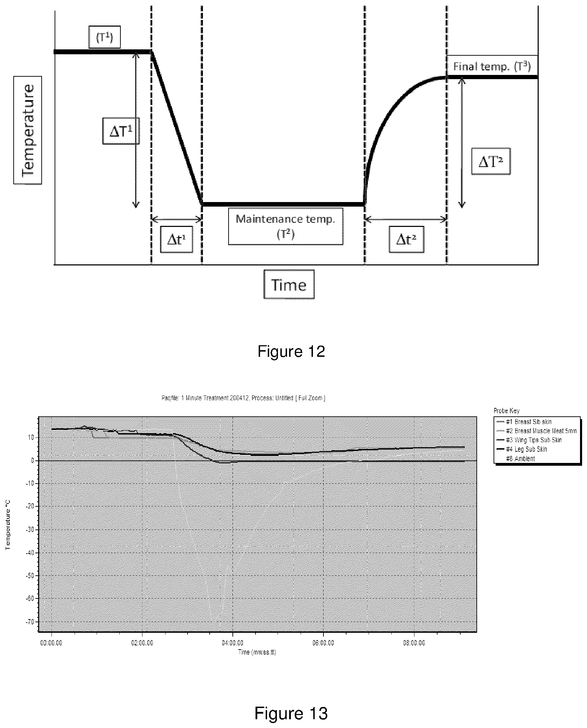

As used herein, the term "selected cooling rate" refers to the average rate of cooling from initial temperature $T^1$ to maintenance temperature $T^2$. This is illustrated schematically in Figure 12, and is calculated as the difference between $T^1$ and $T^2$ (referred to as $\Delta T^1$) divided by the time taken to achieve this reduction (referred to as $\Delta t^1$), and is expressed in terms of $°Cs^{-1}$. The skilled person will appreciate that it is not always practicable or desirable to provide a linear decrease in temperature.

The selected cooling rate is preferably between 0.1 and 10 $°Cs^{-1}$, more preferably between 0.3 and 1.5 $°Cs^{-1}$

Temperature $T^2$ is preferably between -20 and -120 °C. Temperature $T^2$ is more preferably between -20 and -100 °C. More preferably, temperature $T^2$ is between -25 and -95 °C. More preferably, is between -40 and -90 °C. Still more preferably, $T^2$ is between -50 and -80 °C.

The atmosphere is maintained at the selected temperature $T^2$. Some variation of surface temperature may occur during this maintenance phase, as when cooling is periodically applied. Preferably, such deviations from $T^2$ are no more than ± 20 °C, more preferably ± 15 °C, still more preferably ± 10 °C.

In preferred embodiments, the atmosphere is maintained at the selected temperature $T^2$ for a selected period of time. The period of time is selected in order to optimise bacterial control in the overall process, whilst avoiding freezing of the of any part of the meat item. It has been found in particular that the duration of the maintenance phase (i.e. the selected period of time at which the atmosphere is maintained at $T^2$) is a factor in determing, in certain embodiments, the warming rate in the subsequent process step.

Preferably, the atmosphere is maintained at the selected temperature $T^2$ for a period of between 10 seconds and 10 minutes, more preferably between 30 seconds and 5 minutes, still more preferably between 1 minute and 4 minutes.

In the third phase of some embodiments, the atmosphere is warmed at a selected warming rate to a temperature $T^3$. Temperature $T^3$ is above temperature $T^2$, such as above -20 °C, more preferably above -10 °C, more preferably above 0 °C. Preferably, $T^3$ is between -1 and 4 °C.

Warming may be achieved by any conventional means, and is most conveniently achieved by simply ceasing the application of cooling. In this case, the latent heat stored in the interior of the meat item will permeate through to the surface of the meat. Alternatively, the meat item can be transferred to a warmer environment, or warm air or other warm gas may be applied to the surface of the meat.

In an alternative embodiment, the ambient temperature is gradually raised by passage of the meat item through an area having a temperature gradient, such as an in-line processing tunnel having a temperature which varies along its length.

As used herein, the term "selected warming rate" refers to the average rate of warming from maintenance temperature $T^2$ to final temperature $T^3$. This is illustrated schematically in Figure 12, and is calculated as the difference between $T^2$ and $T^3$ (referred to as $\Delta T^2$) divided by the time taken to achieve this reduction (referred to as $\Delta t^2$), and is expressed in terms of $°Cs^{-1}$. The skilled person will appreciate that it is not always practicable or desirable to provide a linear increase in temperature.

Preferably, the selected warming rate is less than 20 $°Cs^{-1}$, more preferably less than 10 $°Cs^{-1}$, more preferably less than 5 $°Cs^{-1}$, more preferably less than 2 $°Cs^{-1}$, more preferably less than 1 $°Cs^{-1}$, still more preferably less than 0.5 $°Cs^{-1}$, most preferably less than 0.1 $°Cs^{-1}$.

Surprisingly, it has been found that warming the meat item at a slower warming rate from maintenance temperature $T^2$ to final temperature $T^3$ leads to enhanced reduction of the number of viable microorganisms present on the surface of a meat item. This was contrary to the expectations of the inventors, and the reasons for this phenomenon are not properly understood.

A number of factors affect the warming rate. These include the maintenance temperature $T^2$, the selected

period of time at which the meat item is held at this temperature, the initial temperature $T^1$, the mass of the meat item and its surface area to mass ratio. In particular, a slow warming rate which favours bacterial control is favoured by a low temperature $T^1$.

In some embodiments, the surface membrane of the meat is exposed to cooling conditions until the surface membrane reaches the selected temperature $T^2$. The selected temperature $T^2$ is chosen such that at least a proportion of the viable microorganisms present on the surface become non-viable when allowed to warm to the selected temperature $T^3$.

The prior art indicates that in order to achieve successful control of microorganisms present on the surface of meat, rapid cooling to a temperature of less than -10 °C for sufficient time to provide a frozen crust on the meat, followed by subsequent warming, is necessary. Surprisingly, the inventors have found that an extremely effective antimicrobial effect can be achieved by rapid surface chilling to temperatures well above -10 °C. In addition, the prior art indicates that a frozen crust is necessary to achieve the sterilisation effect. Surprisingly, the inventors have found that providing a frozen crust is not a requirement, and indeed superior results are obtained in certain instances when the surface membrane remains unfrozen.

Preferably, the selected first temperature is below 2 °C. More preferably, the selected first temperature is below 1 °C. More preferably, the selected first temperature is below 0.5 °C. Still more preferably, the selected first temperature is below 0 °C. Still more preferably, the selected first temperature is below -0.5 °C. Preferably, the selected first temperature is above -5 °C. More preferably, the selected first temperature is above -4 °C. Still more preferably, the selected first temperature is above -3.5 °C. Still more preferably, the selected first temperature is above -3 °C. Still more preferably, the selected first temperature is above -2.5 °C. Most preferably, the selected first temperature is above -2 °C. Utilising a temperature above -2 °C has the advantage that meat treated according to the process fulfils the requirement that 'fresh poultrymeat' is to be kept at a not below -2°C at any time

Preferably, the selected first temperature being in the range of between -5 °C and 2 °C. More preferably, the selected first temperature is between -3 °C and 1 °C. Still more preferably, the selected first temperature is between -2 °C and 0.5 °C

The selected first temperature and selected second temperature refer to temperature of the surface as measured by infrared thermometer or a probe inserted within or just below the membrane.

Prior to exposure of the surface membrane to the cooling step of the invention, the meat item may be at ambient temperature (for example, between 20 °C and 29 °C), or it may be (and preferably is) pre-chilled to below ambient temperature. In one embodiment, the meat item is pre-chilled to a temperature below ambient temperature, such that the temperature of the meat item is substantially uniform throughout the meat item. Preferably, the meat item is pre-chilled to below 15 °C, more preferably to below 10 °C, still more preferably to below 5 °C, still more preferably to below 2 °C.

It may be more convenient, however, to carry out the process of the invention on meat items which arrive from the preceding steps in the processing plant without a preliminary step of refrigeration.

The cooling rate is selected such that the desired temperature reduction of the surface membrane occurs sufficiently rapidly that no substantial change in the temperature of the underlying muscle occurs. The skilled person will be able to determine a suitable cooling rate for each particular type of meat item.

In a particularly preferred embodiment, the meat item is cooled by reducing the ambient temperature (i.e. the temperature of the atmosphere surrounding the meat item) at a rate of between 0.1 °Cs$^{-1}$ and 5 °Cs$^{-1}$, more preferably at a rate of between 0.2 °C s$^{-1}$ and 3 °C s$^{-1}$, most preferably at a rate of between 0.5 °C s$^{-1}$ and 3 °C s$^{-1}$. Preferably, the ambient temperature of the atmosphere surrounding the meat is cooled to a temperature of between -10 °C and -150 °C, more preferably between -20 °C and -100 °C, still more preferably between -30 °C and -90 °C.

Preferably, the meat item is exposed to the surface cooling conditions for as short a period of time as feasible. This ensures that the temperature gradient through the meat item is high, and a large differential between the temperature of the surface membrane and the temperature of the underlying muscle is maintained.

Optionally, and preferably, the surface membrane of the meat item is maintained at the preselected temperature for a period of time. This period of time is selected such that insufficient heat is transferred from the muscle meat to cause a significant increase in the activity of HADH.

In one preferred embodiment, the cooling is achieved by use of a refrigerated tunnel having a predetermined temperature profile. The rate of passage of the meat items through the tunnel is adjusted so as to obtain the correct rate of cooling. This embodiment is particularly convenient when the process of the invention is part of the production line for the preparation of meat products.

Preferably, the surface membrane of the meat item is maintained at the selected temperature $T^2$ for between 30 seconds and 20 minutes, preferably between 1 minute and 10 minutes, more preferably between 1.5 minutes and 7 minutes, most preferably between 2 and 6 minutes.

The selected temperature $T^3$ is higher than the selected temperature $T^2$. The differential between the selected temperature $T^2$ and $T^3$ is selected such that the number of viable microorganisms is reduced, and also to fit efficiently with subsequent steps in the processing of the meat item. Preferably, the selected temperature $T^3$ is above -1 °C.

Preferably, the selected temperature $T^3$ is below 20 °C, more preferably below 15 °C, still more preferably below 10 °C, still more preferably below 5 °C, most preferably below 4 °C. Very preferably, the selected temperature $T^3$ is between -1 °C and 4 °C. Maintaining the temperature not higher than +4°C at any time fulfils the requirement for fresh poultry meat under European legislation.

Quantitative assessment of the number of viable microorganisms present on surface membrane is carried out in accordance with appropriate protocols. For example, *Campylobacter* is quantified according to ISO/TS 10272-2:2006(E) *"Microbiology of food and animal feeding stuffs - Horizontal method for detection and enumeration of Campylobacter spp. - Part 2: Colony-count technique".* Other microorganisms may be quantified using different techniques. The term "number of viable microorganisms" will be understood by the skilled person as referring to the number of such microorganisms present per unit surface area of surface tissue.

The rate of cooling, the selected first temperature and the selected second temperature are chosen such that the reduction in the number of viable microorganisms present on the surface of the meat observed is at least statistically significant within the limits of the quantification method used. Preferably, at least a log (ten-fold) reduction in the number of microorganisms present is achieved. More preferably, at least a 2-log (hundred-fold) reduction in the number of microorganisms present is achieved.

Preferably, the $R_1$ of the HADH activity in the treated item is less than 2, more preferably less than 1.5, more preferably less than 1.2, more preferably less than 1.1.

Because the muscle tissue remains largely unaffected by the treatment of the skin (or other surface membrane) according to the present invention, the meat item retains the organoleptic and nutritional qualities of fresh meat.

Subsequent to treatment with the inventive process, the treated meat items may be subjected to any further processes customary for the treatment of fresh meat, such as jointing, chilling (air and water chilling are contemplated), and packing or wrapping. Preferably, the inventive process is one of the last steps on the production line prior to packing to prevent the possibility of recontamination of the treated meat item.

In some embodiments, the present food hygiene methods may be combined with additional food hygiene treatments. Suitable additional treatments include chemical treatments (such as chlorine, chloramine, chlorite, chlorine dioxide, ozone, organic acids (such as citric and lactic acid), hydrogen peroxide and potassium permanganate. Other treatments include gamma wave irradiation, treatment with steam, treatment with electrified water, and crust-freezing.

The process may also include further process steps such as curing, smoking, salting, pickling, or cooking.

## Examples

The process involved using a CRYOLINE® CF unit which has a temperature control system with an ability to inject cryogenic gases into the unit for cooling purposes.

The cabinet has an inner chamber into which slaughtered poultry carcases were hung by their legs, which allowed the neck skin to hang clear of the bird, and the body cavity entrance to be open.

The unit was set to a temperature that allowed rapid cooling of the skin of the bird and other outer or exposed membranes such that a temperature of below -2 °C was achieved, with no parts going below - 3.8 °C. This was achieved via the use of a cryogenic gas spray bar which introduced liquid nitrogen into the cabinet, and a circulation fan able to deliver impingement, or rapid temperature exchange, on the exposed membranes.

The flesh of the bird was not frozen, but the skin and membranes underwent rapid cooling. This was followed by removal from the unit, and the carcass was then allowed to rise back in temperature to the normal chilled holding range of -1 °C to +4 °C.

This process was designed to rapidly cool the surface membrane and *campylobacter* bacteria present upon the carcass surfaces, and to render them into a cold tempered state, similar to that seen just before the product passes through the latent heat phase, thus avoiding full freezing of the poultry carcases. The rapid cold shock administered to the bacteria on the bird renders them damaged such that during the temperature rise back to normal chill temperatures the *Campylobacter* bacteria are severely damaged or killed, rendering them unable to create infection.

The birds were rapidly chilled in the cabinet and this was completed satisfactorily without the freezing of the muscle units of the birds, in times from around 30 seconds up to a dwell time of five minutes, depending upon carcass size and ingoing temperature.

Example 1

The cabinet was set to a temperature of -80 °C (other temperatures delivered the same result but took more or less timer to deliver the cold tempered state).

In some cases the campylobacter bacteria were fully destroyed, and in all cases in excess of a two log reduction was delivered. This damage and destruction of *Campylobacter* is delivered by faster and simpler means than any previous process.

Table 1 indicates the *Campylobacter* count achieved after treatment of naturally infected chicken or turkey carcasses according to this protocol.

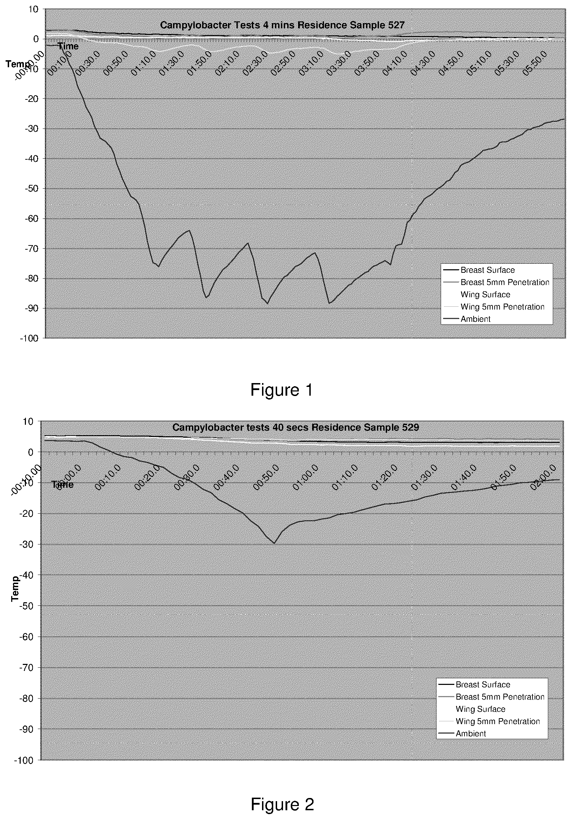

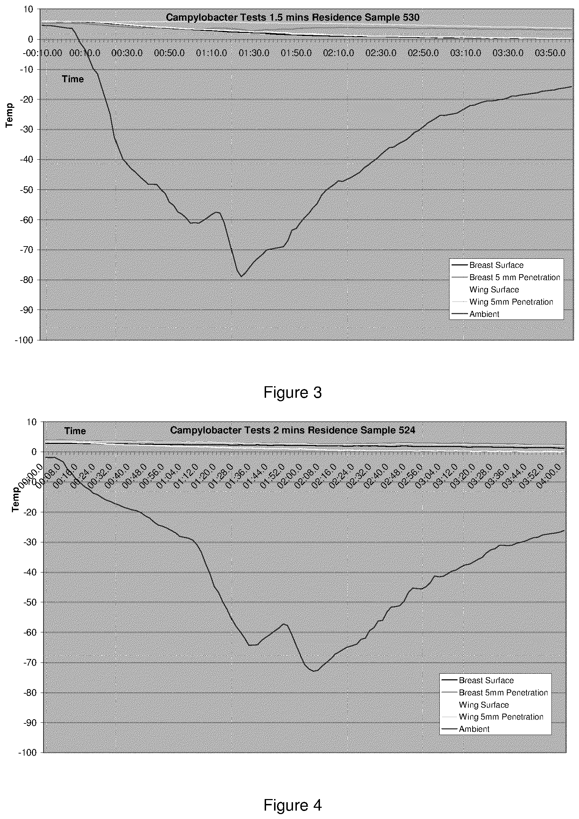

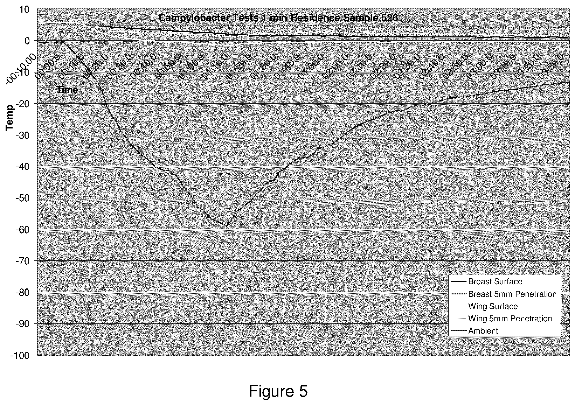

Figures 1 to 5 indicate the temperature profile of the surface of turkey carcasses exposed to rapid chilling conditions at i) the surface and ii) 5mm depth penetration of the wing and breast.

Table 1

| Sample No | Temperature/ Time | SURFACE TEMP °C IN | SURFACE TEMP °C OUT | Campylobacter count cfu/g |
|---|---|---|---|---|
| 1 | -80°C 2 mins | 1-1.5°C | 0.5°C | 0.00E+00 |
| 2 | -80 °C 2 mins | 1-1.5°C | 0.5 °C | 0.00E+00 |
| 3 | -80°C 4 mins | 1-1.5°C | -1.5°C | 0.00E+00 |
| 4 | -80°C 4 mins | 1-1.5°C | -1.5°C | 0.00E+00 |
| 5 | -80 °C 6 mins | 1-1.5°C | 0.3 to -0.3°C | 0.00E+00 |
| 6 | -80 °C 6 mins | 1-1.5°C | 0.3 to -0.3°C | 0.00E+00 |
| 7 | -80 °C 5 mins | 1-1.5°C | -0.2°C | 0.00E+00 |
| 8 | -80°C 5 mins | 1-1.5°C | -0.2°C | 0.00E+00 |
| 9 | -80°C 5 mins | 1-1.5°C | -1.1 to -1.9°C | 0.00E+00 |
| 10 | -80 °C 5 mins | 1-1.5°C | -1.1 to -1.9°C | 0.00E+00 |
| 11 | CONTROL | ~ | ~ | 1.00E+02 |
| 12 | CONTROL | ~ | ~ | 5.00E+01 |
| 13 | CONTROL | ~ | ~ | 5.00E+01 |
| 14 | CONTROL | ~ | ~ | 3.00E+02 |
| 15 | CONTROL | ~ | ~ | 2.00E+01 |
| 16 | CONTROL | ~ | ~ | 1.00E+01 |
| 17 | CONTROL | ~ | ~ | 2.00E+02 |
| 18 | CONTROL | ~ | ~ | 1.00E+01 |
| 19 | CONTROL | ~ | ~ | 1.00E+01 |

Example 2

All birds were pre chilled to 4 °C as testing was completed externally. They were treated for between 30 seconds and for 2 minutes under the conditions used for Example 1. The reduction in campylobacter count is shown in Table 2.

## Table 2

| | Sample Description | Day 1 | | | Day 7 | | |
|---|---|---|---|---|---|---|---|
| | | Aerobic Plate Count per g | Count of presumptive Campylobacter per g | Count of confirmed Campylobacter per g | Aerobic Plate Count per g | Count of presumptive Campylobacter per g | Count of confirmed Campylobacter per g |
| 1 | Chicken Control | 710,000 | 500 | 300 | 12,000,00 | <10 | <10 |
| 2 | Chicken Control | 3,200,000 | 370 | 370 | 25,000,00 | <10 | <10 |
| 3 | Chicken Control | 23,000,00 | 460 | 460 | 12,000,00 | 90 | |
| 4 | Chicken Control | 1,900,000 | 210 | 210 | 16,000,00 | <10 | <10 |
| 5 | Chicken Control | 140,000 | 60 | 60 | 13,000,00 | <10 | <10 |
| 6 | Chicken Control | 380,000 | 490 | 490 | 14,000,00 | <10 | <10 |
| 7 | Chicken Control | 350,000 | 830 | 830 | 16,000,00 | 340 | |
| 8 | Chicken Control | 1,100,000 | 80 | <10 | 21,000,00 | <10 | <10 |
| 11 | Chicken Treated | 130,000 | <10 | <10 | 12,000,00 | <10 | <10 |
| 12 | Chicken Treated | 84,000 | <10 | <10 | 14,000,00 | <10 | <10 |
| 13 | Chicken Treated | 660,000 | <10 | <10 | 16,000,00 | <10 | <10 |
| 14 | Chicken Treated | 140,000 | <10 | <10 | 14,000,00 | <10 | <10 |
| 15 | Chicken Treated | 140,000 | <10 | <10 | 12,000,00 | <10 | <10 |
| 16 | Chicken Treated | 740,000 | 110 | <10 | 12,000,00 | <10 | <10 |
| 17 | Chicken Treated | 450,000 | <10 | <10 | 14,000,00 | <10 | <10 |
| 18 | Chicken Treated | 80,000 | <10 | <10 | 13,000,00 | <10 | <10 |
| 19 | Chicken Treated | 75,000 | <10 | <10 | 13,000,00 | <10 | <10 |
| 20 | Chicken Treated | 120,000 | <10 | <10 | 14,000,00 | <10 | <10 |
| 21 | Turkey Control | 26,000 | 50 | <10 | 13,000,00 | <10 | <10 |
| 22 | Turkey Control | 58,000 | 300 | 60 | 16,000,00 | 50 | |
| 23 | Turkey Control | 26,000 | 140 | 84 | 12,000,00 | <10 | <10 |
| 24 | Turkey Control | 51,000 | 300 | 240 | 19,000,00 | 60 | |
| 27 | Turkey Treated | 17,000 | 10 | 10 | 21,000,00 | 10 | |
| 28 | Turkey Treated | 17,000 | <10 | <10 | 23,000,00 | <10 | <10 |
| 29 | Turkey Treated | 15,000 | 20 | 20 | 16,000,00 | <10 | <10 |
| 30 | Turkey Treated | 35,000 | 90 | 90 | 18,000,00 | <10 | <10 |
| 31 | Turkey Treated | 9,900 | 50 | 30 | 19,000,00 | 20 | |
| 32 | Turkey Treated | 52,000 | 90 | 18 | 23,000,00 | 20 | |

Example 3

This example used only chickens. All birds were pre chilled to 4 °C. They were treated for between 1 minute and 2.5 minutes under the conditions used for Example 1. The reduction in campylobacter count is shown in Table 3.

**Table 3**

| Initial Bird Condition | Treatment Time | Day | Control Campylobacter Count (log) | Treated Campylobacter Count (log) | Difference |
|---|---|---|---|---|---|
| Cold | 1 min | 1 | 2.48 | 1.9 | 0.58 |

(continued)

| Initial Bird Condition | Treatment Time | Day | Control Campylobacter Count (log) | Treated Campylobacter Count (log) | Difference |
|---|---|---|---|---|---|
| Cold | 2 min | 1 | 2.48 | 1.98 | 0.50 |
| Cold | 1.5 min | 1 | 3.75 | 3.69 | 0.06 |
| Cold | 2.5 min | 1 | 3.75 | 2.62 | 1.13 |
| Cold | 2.5 min | 1 | 2.44 | 1.61 | 0.83 |
| Cold | 2.5 min | 1 | 2.80 | 2.47 | 0.33 |
| Cold | 2.5 min | 7 | 2.38 | 1.65 | 0.73 |
| Cold | 2 min | 1 | 1.88 | 1.61 | 0.27 |
| Cold | 2 min | 7 | 1.40 | 1.04 | 0.36 |

Example 4

Chilled turkey carcasses (10 in total) at 4 °C are treated under the conditions described in example 1 and held in the cryogenic cabinet for 2 minutes to an average surface temperature of -2 °C. All turkeys are allowed to warm to 4 °C. Five turkeys are allowed to warm over a period of 1 minute. The remaining turkeys are allowed to warm over a period of 10 minutes. Warming rates are varied by allowing ingress of ambient temperature air at differing rates. The carcasses allowed to warm more slowly exhibited lower counts of campylobacter compared with those allowed to warm over 1 minute.

Example 5

Chilled chicken carcasses (10 in total) at 4 °C were treated under the conditions described in example 1 and held in the cryogenic cabinet for 1 minute or 45 seconds with the atmospheric temperature at -80 °C. Some birds were removed from the cabinet immediately after treatment, and allowed to warm to 4 °C. A further set of birds were allowed to remain in the cabinet after the cessation of refrigeration, for a period of between 45 seconds and 2 minutes (referred to as "with dwell" birds). The reduction in campylobacter count is shown in Table 4.

Table 4

| | GEOMETRIC AVERAGE | LOG$_{10}$ VALUES | | LOG DIFFERENCE (compared to control) |
|---|---|---|---|---|
| CONTROL | 1,525 | 3.18 | | |
| 45 seconds (all data) | 1,324 | 3.12 | | -0.06 |
| 45 seconds (no dwell) | 1,511 | 3.18 | | 0.00 |
| 45 seconds (with dwell) | 1,199 | 3.08 | | -0.10 |
| 1 minute | 361 | 2.56 | | -0.63 |

Conclusions:

• 45 second treatment with no dwell in the cabinet produced almost exactly the same value as control.

• 45 second treatment plus dwell in the cabinet produced a small 0.1 log difference.

• 1 minute treatment looks even more effective than shorter residence times.

**EP 3 318 133 B1**

**Claims**

1. A process for reducing the number of viable microorganisms present on the surface of a meat item, comprising the steps of:

   a) placing an untreated meat item in a chamber wherein the chamber atmosphere has a temperature $T^1$ between -5 and 20°C;
   b) reducing the temperature of the chamber atmosphere at a selected cooling rate of between 0.1 and 10°Cs$^{-1}$ to a temperature $T^2$ below -20 °C;
   c) maintaining the chamber atmosphere at temperature $T^2$ for a selected period of time;
   d) allowing the meat item to warm, at a selected warming rate of less than 20 °Cs$^{-1}$, by adjusting the temperature of the chamber atmosphere to a temperature $T^3$ above - 20 °C;

   wherein the temperature of the meat item does not fall below -2 °C and the meat item remains unfrozen.

2. A process according to Claim 1 wherein the meat item is selected from a whole poultry carcass, optionally eviscerated, and a poultry portion.

3. A process according to any preceding Claim wherein the chamber atmosphere may be air, nitrogen or any other gas.

4. A process according to any preceding Claim wherein the microorganisms comprise at least *Campylobacter* species.

5. A process according to any preceding Claim wherein the cooling rate is between 0.3 and 1.5 °Cs$^{-1}$.

6. A process according to any preceding claim wherein the surface temperature of the meat item as measured by infrared thermometry or as measured by a probe 5 mm below the surface does not fall below -2 °C.

7. A process according to any preceding Claim wherein the selected warming rate is less than 0.5 °Cs$^{-1}$.

8. A process according to any preceding Claim wherein $T^3$ is between $T^2$ and $T^1$.


**Patentansprüche**

1. Verfahren zur Reduzierung der Anzahl von lebensfähigen Mikroorganismen, die auf der Oberfläche einer Fleischware vorliegen, das die folgenden Schritte umfasst:

   a) Platzieren einer unbehandelten Fleischware in einer Kammer, wobei die Kammeratmosphäre eine Temperatur $T^1$ zwischen -5 und 20 °C aufweist;
   b) Reduzieren der Temperatur der Kammeratmosphäre bei einer ausgewählten Kühlrate von zwischen 0,1 und 10 °Cs$^{-1}$ auf eine Temperatur $T^2$ unter -20 °C;
   c) Halten der Kammeratmosphäre bei Temperatur $T^2$ für eine ausgewählte Zeitdauer;
   d) Ermöglichen des Erwärmens der Fleischware bei einer ausgewählten Erwärmungsrate von weniger als 20 °Cs$^{-1}$ durch Einstellen der Temperatur der Kammeratmosphäre auf eine Temperatur $T^3$ über -20 °C;

   wobei die Temperatur der Fleischware nicht unter -2 °C fällt und die Fleischware nicht gefroren wird.

2. Verfahren nach Anspruch 1, wobei die Fleischware aus einem ganzen Geflügelschlachtkörper, optional ausgenommen, und einem Geflügelteil ausgewählt ist.

3. Verfahren nach einem vorstehenden Anspruch, wobei die Kammeratmosphäre Luft, Stickstoff oder jedwedes andere Gas sein kann.

4. Verfahren nach einem vorstehenden Anspruch, wobei die Mikroorganismen zumindest *Campylobacter*-Spezies umfassen.

5. Verfahren nach einem vorstehenden Anspruch, wobei die Kühlrate zwischen 0,3 und 1,5 °Cs$^{-1}$ beträgt.

**6.** Verfahren nach einem vorstehenden Anspruch, wobei die Oberflächentemperatur der Fleischware, wie durch Infrarot-Thermometrie gemessen oder durch eine Sonde 5 mm unter der Oberfläche gemessen, nicht unter -2 °C fällt.

**7.** Verfahren nach einem vorstehenden Anspruch, wobei die ausgewählte Erwärmungsrate weniger als 0,5 °Cs$^{-1}$ beträgt.

**8.** Verfahren nach einem vorstehenden Anspruch, wobei T$^3$ zwischen T$^2$ und T$^1$ liegt.

## Revendications

**1.** Procédé de réduction du nombre de microorganismes viables présents à la surface d'un article de viande, comprenant les étapes consistant à :

   a) placer un article de viande non traité dans une chambre, l'atmosphère de la chambre ayant une température T$^1$ comprise entre -5 et 20°C ;
   b) réduire la température de l'atmosphère de la chambre selon une vitesse de refroidissement sélectionnée entre 0,1 et 10°Cs$^{-1}$ jusqu'à une température T$^2$ inférieure à -20°C ;
   c) maintenir l'atmosphère de la chambre à la température T$^2$ pendant une période de temps sélectionnée ;
   d) laisser l'article de viande se réchauffer, selon une vitesse de réchauffement sélectionnée inférieure à 20°Cs$^{-1}$, par l'ajustement de la température de l'atmosphère de la chambre jusqu'à une température T$^3$ supérieure à -20°C ;

   dans lequel la température de l'article de viande ne descend pas en dessous de -2°C et l'article de viande reste non congelé.

**2.** Procédé selon la revendication 1, dans lequel l'article de viande est choisi parmi une carcasse entière de volaille, éventuellement éviscérée, et une portion de volaille.

**3.** Procédé selon l'une quelconque des revendications précédentes, dans lequel l'atmosphère de la chambre peut être constituée d'air, d'azote, ou de tout autre gaz.

**4.** Procédé selon l'une quelconque des revendications précédentes, dans lequel les microorganismes comprennent au moins une espèce de *Campylobacter.*

**5.** Procédé selon l'une quelconque des revendications précédentes, dans lequel la vitesse de refroidissement est comprise entre 0,3 et 1,5°Cs$^{-1}$.

**6.** Procédé selon l'une quelconque des revendications précédentes, dans lequel la température de surface de l'article de viande, telle que mesurée par thermométrie infrarouge ou telle que mesurée par une sonde 5 mm en dessous de la surface, ne descend pas en dessous de -2°C.

**7.** Procédé selon l'une quelconque des revendications précédentes, dans lequel la vitesse de réchauffement sélectionnée est inférieure à 0,5°Cs$^{-1}$.

**8.** Procédé selon l'une quelconque des revendications précédentes, dans lequel T$^3$ est comprise entre T$^2$ et T$^1$.

Figure 1

Figure 2

Figure 3

Figure 4

Figure 5

Figure 6

Figure 7

Figure 8

Figure 9

Figure 10

Figure 11

Figure 12

Figure 13

## REFERENCES CITED IN THE DESCRIPTION

**Patent documents cited in the description**

- GB 2105570 A
- US 3637405 A

- WO 2004080189 A

**Non-patent literature cited in the description**

- Reduction of C. jejuni on the Surface of Poultry by Low Temperature. *J. Food Prot,* 2003, vol. 66 (4), 652-655
- The Effect of Superchilling and Rapid Freezing on the HADH Assay for Chicken and Turkey. *J. Assoc. Publ. Analysts,* 2010, vol. 38, 13-23

- **HARGIN, K.** Verification of Labelling of Previously Frozen Meat and Poultry by Measurement of HADH Activity. *J. Assoc. Publ. Analysts,* 1997, vol. 33, 1-46